# EUROPEAN PATENT SPECIFICATION

(11) **EP 2 874 158 B1**
(45) Date of publication and mention of the grant of the patent: **07.11.2018**
(21) Application number: 13816812.5
(22) Date of filing: 12.06.2013
(51) Int. Cl.: H01B 13/00, H01B 1/06, H01M 10/0562, H01M 10/054, H01M 10/39

(54) **METHOD FOR PRODUCING ION-CONDUCTIVE SUBSTANCE, ION-CONDUCTIVE SUBSTANCE, CRYSTALLIZED ION-CONDUCTIVE SUBSTANCE, AND CELL**
VERFAHREN ZUR HERSTELLUNG EINER IONENLEITENDEN SUBSTANZ, IONENLEITENDE SUBSTANZ, KRISTALLISIERTE IONENLEITENDE SUBSTANZ UND ZELLE
PROCÉDÉ DE FABRICATION DE SUBSTANCE CONDUCTRICE DES IONS, SUBSTANCE CONDUCTRICE DES IONS, SUBSTANCE CRISTALLISÉE CONDUCTRICE DES IONS, ET CELLULE

(30) Priority: 12.07.2012 JP 2012156278
(43) Date of publication of application: 20.05.2015
(73) Proprietor: Idemitsu Kosan Co., Ltd, Tokyo 100-8321 (JP)
(72) Inventor: KAMBARA, Takayoshi, Sodegaura-shi, Chiba 2990293 (JP); JUNKE, Tadanori, Sodegaura-shi, Chiba 2990293 (JP); ABURATANI, Ryo, Sodegaura-shi, Chiba 2990293 (JP)
(74) Representative: Gill Jennings & Every LLP
(86) International application number: PCT/JP2013/003696
(87) International publication number: WO 2014/010169

(56) References cited:
- EP-A1- 2 712 468
- WO-A1-2012/026238
- JP-A- H05 306 117
- JP-A- H10 321 256
- JP-A- 2012 048 973
- JP-A- 2012 104 279
- JP-A- 2012 104 279
- US-A- 5 085 953
- US-A1- 2012 094 185
- KENNEDY J H ET AL: "Ionically conductive sulfide-based lithium glasses", JOURNAL OF NON-CRYSTALLINE SOLIDS, NORTH-HOLLAND PHYSICS PUBLISHING. AMSTERDAM, NL, vol. 123, no. 1-3, 2 August 1990 (1990-08-02), pages 328-338, XP024058305, ISSN: 0022-3093, DOI: 10.1016/0022-3093(90)90804-U [retrieved on 1990-08-02]

## Description

### Technical Field

The invention relates to a method for producing an ionic conductive substance, an ionic conductive substance, a crystallized ionic conductive substance and a battery.

### Background Art

In recent years, there is an increasing demand for a high-performance lithium secondary battery or the like, which is used in PDA, a portable electronic device, a home-use compact power storage facility, an auto-bicycle powered by a motor, an electric vehicle, a hybrid electric vehicle or the like. Here, a secondary battery means a battery that can charge and discharge. With an increase in application where the battery is used, a further improvement in safety and an increase in performance of a secondary battery have come to be required.

Conventionally, electrolytes exhibiting high lithium ion conductance at room temperature are mostly limited to organic electrolytes. However, conventional organic electrolytes are inflammable due to presence of an organic solvent. Therefore, when an ionic conductive material containing an organic solvent is used as an electrolyte of a battery, there is a concern of liquid leakage or ignition.

Therefore, a sulfide-based solid electrolyte having a high ionic conductivity and high safety has been developed. For example, in Patent Document 1, a technology is disclosed in which an increase in interface resistance with an active material is suppressed by adding an additive.

However, since the sulfide-based solid electrolyte in Patent Document 1 is produced by means of a ball mill, and the ball and the electrolyte in the mill container are adhered at the time of production, there is a disadvantage that the working efficiency is lowered and the yield is low.

Patent Document 2 relates to a sulfide solid electrolyte material that comprises Li, P, S and I and is glass ceramic.

Patent Document 3 relates to a sulfide solid electrolyte material comprising an ion conductor with an ortho-composition, and LiI, characterized in that the sulfide solid electrolyte material is glass with a glass transition point.

Patent Document 4 relates to solid state electrolytes comprised of either Li₃PO₄ as a network former and/or network modifier.

Patent Document 5 relates to a solid electrolyte material which includes fluorine.

Non-Patent Document relates to ionically conductive sulfide-based lithium glasses.

### Related Art Documents

### Patent Document

Patent Document 1: WO2012/026561
Patent Document 2: JP2012/104279 A
Patent Document 3: WO2012/026238 A1
Patent Document 4: US5085953 A
Patent Document 5: US2012/094185 A1

Non- Patent Document: Kennedy J H et al, "Ionically conductive sulfide-based lithium glasses", J. Non-Crystalline Solids, North-Holland Physics Publishing, Amsterdam NL, Vol. 123, No. 1-3, 2 Aug 1990, p328-338

### Summary of the Invention

An object of the invention is aimed at providing a method for producing a sulfide-based solid electrolyte having a high yield and a high working efficiency.

According to the invention, the following method for producing an ionic conductive substance or the like are provided.
1. A method for producing an ionic conductive substance wherein an ionic conductive substance is produced by using a production apparatus that is provided with:
   a mechanical energy supplying means that imparts mechanical energy to raw materials in a solvent;
   a contacting means that allows the raw materials to contact with each other in the solvent;
   a connecting means that connects the mechanical energy supplying means with the contacting means; and
      a circulating means that circulates the raw materials and/or a reaction product of the raw materials between the mechanical energy supplying means and the contacting means through the connecting means,
   wherein
   the raw materials comprise one or more compounds selected from phosphorus sulfide, germanium sulfide, silicon sulfide and boron sulfide, a sulfide of a metal element belonging to group I or group II of the periodic table, and a halogen compound,
      characterized in that the halogen compound is LiBr and the mechanical energy supplying means is a beads mill.
2. The method for producing an ionic conductive substance according to 1, wherein the one or more compounds selected from phosphorus sulfide, germanium sulfide, silicon sulfide and boron sulfide is phosphorus sulfide.
3. The method for producing an ionic conductive substance according to 1 or 2, wherein the sulfide of a metal element belonging to group I or group II of the periodic table is lithium sulfide.
4. The method for producing an ionic conductive substance according to any one of claims 1 to 3, wherein the solvent is a hydrocarbon-based organic solvent.
5. The method for producing an ionic conductive substance according to any one of 2 to 4, wherein the amount of phosphorus sulfide at the time of the reaction is 30 mol% or more and 95 mol% or less relative to the total lithium sulfide and phosphorus sulfide.
6. The method for producing an ionic conductive substance according to any one of 2 to 5, wherein the molar ratio of the total molar amount of lithium sulfide and phosphorus sulfide relative to the halogen compound is 50:50 to 99:1.
7. The method for producing an ionic conductive substance according to any one of 1 to 6, wherein the temperature in the mechanical energy supplying means is 20°C or higher and 80°C or lower.
8. The method for producing an ionic conductive substance according to any one of 1 to 7, wherein the temperature in the contacting means is 25°C or higher and 300°C or lower.

According to the invention, it is possible to provide a method for producing an ionic conductive substance such as sulfide-based glass, in which an ionic conductive substance can be obtained in a high yield with a high working efficiency.

### Brief Description of the Drawings

FIG. 1 is a view showing one embodiment of a production apparatus used in the third aspect of the invention; and
FIG. 2 is a view showing another embodiment of the production apparatus used in the third aspect of the invention.

### Mode for Carrying out the Invention

### 1. First aspect of the method for producing an ionic conductive substance

A production method according to the first aspect also disclosed herein (first production method) comprises a step of contacting raw materials in a solvent,
wherein the raw materials comprise: one or more compounds selected from phosphorus sulfide, germanium sulfide, silicon sulfide and boron sulfide (hereinafter referred to as "first sulfide"); a sulfide of a metal element belonging to group I or group II of the periodic table (hereinafter referred to as "second sulfide"); and a halogen compound represented by the following formula (1):

M_{w}Xₓ (1)

wherein in the formula (1), M is Li, B, Na, K, Rb, Cs, Ca, Mg, Sr, Ba, Al, Si, P, S, Ge, As, Se, Sn, Sb, Te, Pb or Bi,
w is 1 or 2,
X is F, CI, Br or I, and
x is an arbitrary integer selected from 1 to 10.

### (1) First sulfide

The first sulfide is one or more compounds selected from phosphorus sulfide, germanium sulfide, silicon sulfide and boron sulfide. The first sulfide is preferably phosphorus sulfide, more preferably phosphorus pentasulfide.

Although no specific restrictions are imposed on the first sulfide, it is preferred that the first sulfide have a high purity.

### (2) Second sulfide

The second sulfide is a sulfide of a metal element belonging to group I or group II of the periodic table. The metal element belonging to group I of the periodic table includes lithium (Li), sodium (Na), potassium (K), rubidium (Rb), cesium (Cs) and francium (Fr). The metal element belonging to group II of the periodic table includes beryllium (Be), magnesium (Mg), calcium (Ca), strontium (Sr), barium (Ba) and radium (Ra).

Specific examples of the second sulfide include lithium sulfide, sodium sulfide, potassium sulfide, rubidium sulfide, cesium sulfide, beryllium sulfide, magnesium sulfide, calcium sulfide, strontium sulfide, barium sulfide or the like. Among these, lithium sulfide and sodium sulfide are preferable, with lithium sulfide being particularly preferable.

The purity of the second sulfide is preferably 90% or more, further preferably 95% or more. The particle size is preferably within a range of 0.01 µm to 100 µm. For example, a particle size of 0:1 µm to 30 µm, 1 µm to 20 µm can be mentioned. Here, the particle size as referred to herein means an average particle size measured by means of a laser diffraction/scattering grain size distribution measuring apparatus.

### (3) Halogen compound

The halogen compound is represented by the above formula (1). Specific examples thereof include, for example, LiF, LiCl, LiBr, LiI, BCl₃, BBr₃, BI₃, AlF₃, AlBr₃, AlI₃, AlCl₃, SiF₄, SiCl₄, SiCl₃, Si₂Cl₆, SiBr₄, SiBrCl₃, SiBr₂Cl₂, SiI₄, PF₃, PF₅, PCl₃, PCl₅, POCl₃, PBr₃, POBr₃, PI₃, P₂Cl₄, P₂I₄, SF₂, SF₄, SF₆, S₂F₁₀, SCl₂, S₂Cl₂, S₂Br₂, GeF₄, GeCl₄, GeBr₄, GeI₄, GeF₂, GeCl₂, GeBr₂, GeI₂, AsF₃, AsCl₃, AsBr₃, AsI₃, AsF₅, SeF₄, SeF₆, SeCl₂, SeCl₄, Se₂Br₂, SeBr₄, SnF₄, SnCl₄, SnBr₄, SnI₄, SnF₂, SnCl₂, SnBr₂, SnI₂, SbF₃, SbCl₃, SbBr₃, SbI₃, SbF₅, SbCl₅, PbF₄, PbCl₄, PbF₂, PbCl₂, PbBr₂, PbI₂, BiF₃, BiCl₃, BiBr₃, BiI₃, TeF₄, Te₂F₁₀, TeF₆, TeCl₂, TeCl₄, TeBr₂, TeBr₄, TeI₄, Nal, NaF, NaCl, NaBr, KI, KF, KCl, KBr, RbI, RbF, RbCl, RbBr, CsI, CsF, CsCl, CsBr, CaF₂, CaCl₂, CaBr₂, CaI₂, MgF₂, MgCl₂ ,MgBr₂, MgI₂, SrF₂, SrCl₂ SrBr₂ SrI₂, BaF₂, BaCl₂, BaBr₂,BaI₂ or the like. The halogen compound is preferably LiCl, LiBr, LiI, PCl₅, PCl₃, PBr₅, PBr₃ or the like, with LiCl, LiBr, LiI, PBr₃ or the like being more preferable.

### (4) Solvent

As the solvent, an organic solvent is preferable.

No specific restrictions are imposed on the solvent, but anon-protonic organic solvent is more preferable.

As the non-protonic organic solvent, a hydrocarbon-based organic solvent, a non-protonic polar organic compound (e.g. an amide compound, a lactam compound, a urea compound, an organic sulfur compound, a cyclic organic phosphorus compound or the like) can preferably be used as a single solvent or as a mixed solvent.

A hydrocarbon-based organic solvent is further preferable. The hydrocarbon-based organic solvent includes a saturated hydrocarbon, an unsaturated hydrocarbon, a halogenated hydrocarbon, an aromatic hydrocarbon or the like.

Among these, a hydrocarbon-based organic solvent having polarity is preferable.

The hydrocarbon-based organic solvent can preferably be used as a single solvent or as a mixed solvent.

As the saturated hydrocarbon, hexane, pentane, 2-ethylhexane, heptane, decane, cyclohexane or the like can be given.

The saturated hydrocarbon can preferably be used as a single solvent or as a mixed solvent.

As the unsaturated hydrocarbon, hexene, heptene, cyclohexene or the like can be given.

The unsaturated hydrocarbon can preferably be used as a single solvent or as a mixed solvent.

No specific restrictions are imposed on the halogenated hydrocarbon. For example, one in which part of hydrogens of the saturated hydrocarbon is substituted by a halogen, one in which part of hydrogens of the unsaturated hydrocarbon is substituted by a halogen and one in which part of hydrogens of the aromatic hydrocarbon is substituted by a halogen can be used. As examples of the halogenated hydrocarbon, for example, heptane fluoride, benzene fluoride, 2,3-dihydroperfluoropentane, 1,1,2,2,3,3,4-heptafluorocyclopentane, 1-fluorohexane, iodomethane, isopropyl bromide, trichloroethylene, chlorobenzene or the like can be given.

The halogenated hydrocarbon can be preferably used as a single solvent or as a mixed solvent.

As the solvent, an aromatic hydrocarbon is most preferable. Examples thereof include toluene, xylene, decalin, 1,2,3,4-tetrahydronaphthalene or the like can be given.

As the aromatic hydrocarbon, toluene and xylene are particularly preferable.

The aromatic hydrocarbon can preferably be used as a single solvent or as a mixed solvent.

It is preferred that the organic solvent used be dehydrated in advance. Specifically, the water content is preferably 100 wt ppm or less, with 30 wt ppm or less being particularly preferable.

If necessary, other solvents may be added to the solvent used. Specific examples of the solvent include a ketone such as acetone and methyl ethyl ketone, an ether such as tetrahydrofuran, an alcohol such as ethanol and butanol, an ester such as ethyl acetate, dichloromethane, chlorobenzene, and a halogenated hydrocarbon including a fluorine-based compound such as heptane fluoride, benzene fluoride, 2,3-dihydroperfluoropenetane and 1,1,2,2,3,3,4-heptafluorocyclopentane.

### (4) Ratio

The amount of the second sulfide is preferably 30 mol% or more and 95 mol% or less relative to the total of the second sulfide and the first sulfide, further preferably 40 mol% or more and 90 mol% or less, with 50 mol% or more and 85 mol% or less being particularly preferable.

Although no specific restrictions are imposed on the mixing ratio (molar ratio) of a halogen compound relative to the total molar amount of the first and second sulfides, it is preferably 50:50 to 99:1, more preferably 55:45 to 98:2, and particularly preferably 60:40 to 97:3.

The amount of the solvent is preferably an amount that allows the first sulfide and the second sulfide as the raw materials to be a solution or a slurry by addition of the solvent. Normally, the added amount of the raw materials (total amount) relative to 1 litter of the solvent is about 0.001 kg or more and 1 kg or less. The amount is preferably 0.005 kg or more and 0.5 kg or less, with 0.01 kg or more and 0.3 kg or less being particularly preferable.

### (5) Contacting step

No specific restrictions are imposed on the method for contacting raw materials with each other in a solvent. For example, a method in which a mixture of raw materials and a solvent is stirred in a container provided with a stirrer can be given. In the invention, it is preferred that raw materials and a solvent be stirred at the time of contacting.

The temperature at the time of the contacting (reaction) step is normally 25°C or more and 300°C or less, preferably 40°C or more and 250°C or less, and more preferably 60°C or more and 200°C or less.

The time taken for the contacting step is normally 5 minutes or longer and 200 hours or shorter, preferably 10 minutes or longer and 100 hours or shorter. If the time of the contacting step is less than 5 minutes, the reaction may be insufficient. If the contacting time is too short, raw materials may remain.

The temperature or the time may be combined based on severar conditions in a stepwise manner. For example, for 1 hour from the start of the contact, the contacting is conducted at 100°C, and for 10 hours from 1 hour after the start of the contacting, heating is conducted at 150°C, or the like.

The contacting step is preferably conducted in an inert gas atmosphere, such as nitrogen and argon. The dew point of the inert gas is preferably -20°C or less, particularly preferably -40°C or less. The pressure is normally, from normal pressure to 100 MPa, preferably from normal pressure to 20 MPa.

After the contacting treatment, generated solid matters and the solvent are separated, whereby an ionic conductive substance is collected. Separation is conducted by a known method such as decantation, filtration, drying or the like, or a combination of these methods.

According to the first method also disclosed herein as mentioned above, an ionic conductive substance can be produced without using a specific equipment such as a mechanical milling apparatus. Therefore, a conductive substance can be produced at a low cost. In addition, since no mechanical milling is conducted, generation of impurities caused by peeling of a wall surface or the like of a mechanical milling apparatus can be prevented.

Further, since no mechanical milling apparatus is used, no defect occurs that glass is adhered to the balls and the inside of the mill container.

### 2. Second aspect of the method for producing an ionic conductive substance

The second aspect of the production method also disclosed herein (the second production method) comprises a step of subjecting raw materials to a mechanical milling treatment in a solvent, wherein the raw materials comprise: one or more compounds selected from phosphorus sulfide, germanium sulfide, silicon sulfide and boron sulfide, a sulfide of a metal element belonging to group I or group II of the periodic table, and a halogen compound represented by the formula (1) mentioned in the first aspect.

The raw materials used in this aspect (first sulfide, second sulfide and halogen compound) or the solvent are the same as those mentioned in the above-mentioned first production method.

### (1) Ratio

The amount of the second sulfide at the time of mechanical milling is preferably 30 mol% or more and 95 mol% or less relative to the total of the second sulfide and the first sulfide, further preferably 40 mol% or more and 85 mol% or less, with 50 mol% or more and 75 mol% or less being particularly preferable.

Although no specific restrictions are imposed on the mixing ratio (molar ratio) of the halogen compound relative to the total molar amount of the first and second sulfides, but it is preferably 50:50 to 99:1, more preferably 55:45 to 98:2, and particularly preferably 60:40 to 97:3.

The added amount of the solvent is preferably an amount that allows the first sulfide and the second sulfide as the raw materials to be a solution or a slurry by addition of a solvent. Normally, the amount of the raw material (total amount) relative to 1 liter of the solvent is about 0.01 kg or more and 1 kg or less. The amount is preferably 0.1 kg or more and 1 kg or less, with 0.2 kg or more and 0.8 kg or less being particularly preferable.

### (2) Mechanical milling treatment step

Various pulverization methods can be used for the mechanical milling treatment. In particular, use of a planetary ball mill is preferable. In a planetary ball mill, while a pot rotates on its axis, a weighing table moves around the pot, and a significantly high impact energy can be generated efficiently. A beads mill is also preferable.

The rotational speed and the rotation time at the time of mechanical milling are not particularly limited. The higher the rotational speed is, the higher a glassy electrolyte generation speed is. A longer rotation time leads to a high conversion rate of raw materials into a glassy electrolyte.

If the rotation speed of the mechanical milling treatment is increased, a burden imposed on the pulverizer may become large. If the rotation time is prolonged, a longer time is taken for the production of a glassy electrolyte.

For example, if a planetary ball mill machine is used, it suffices that the rotation speed be 250 rpm or more and 300 rpm or less and the treatment be conducted for 5 minutes or longer and 50 hours or shorter. The treatment time is more preferably 10 minutes or longer and 40 hours or shorter.

In this aspect, since a mechanical milling treatment is conducted in the presence of a solvent, the treatment time can be shortened. Heating may be conducted from room temperature to 200°C, if necessary.

By drying a formed product after the mechanical milling treatment, and by removing the solvent, an ionic conductive substance can be obtained.

According to the second production method also disclosed hereinmentioned above, by conducting a mechanical milling treatment in the state where a solvent is added, granulation effect at the time of the treatment can be suppressed, whereby a synthesis reaction can be accelerated efficiently. As a result, an ionic conductive substance having excellent uniformity and having a small amount of an unreacted raw material can be obtained. Further, adhesion of the raw material or a reacted product can be prevented from adhering to the wall or the like of the reaction apparatus, whereby the yield of the product can be improved.

### 3. Third aspect of the method for producing an ionic conductive substance.

The third aspect of the production method, which is the present invention, (third production method) is a method for producing an ionic conductive substance wherein an ionic conductive substance is produced by using a production apparatus that is provided with:
a mechanical energy supplying means that imparts mechanical energy to raw materials in a solvent;
a contacting means that allows the raw materials to contact with each other in the solvent;
a connecting means that connects the mechanical energy supplying means with the contacting means; and
a circulating means that circulates the raw materials and/or a reaction product of the raw materials between the mechanical energy supplying means and the contact means through the connecting means.

As the raw materials, one or more compounds selected from phosphorus sulfide, germanium sulfide, silicon sulfide and boron sulfide, a sulfide of a metal element belonging to group I or group II of the periodic table, and a halogen compound characterized in that the halogen compound is LiBr and the mechanical energy supplying means is a beads mill.

The raw materials (first sulfide, second sulfide and halogen compound) or the solvent used in this aspect are the same as those in the above-mentioned first production method.

### (1) Production apparatus

Examples of the production apparatus used in the third production method will be explained below with reference to the drawings.

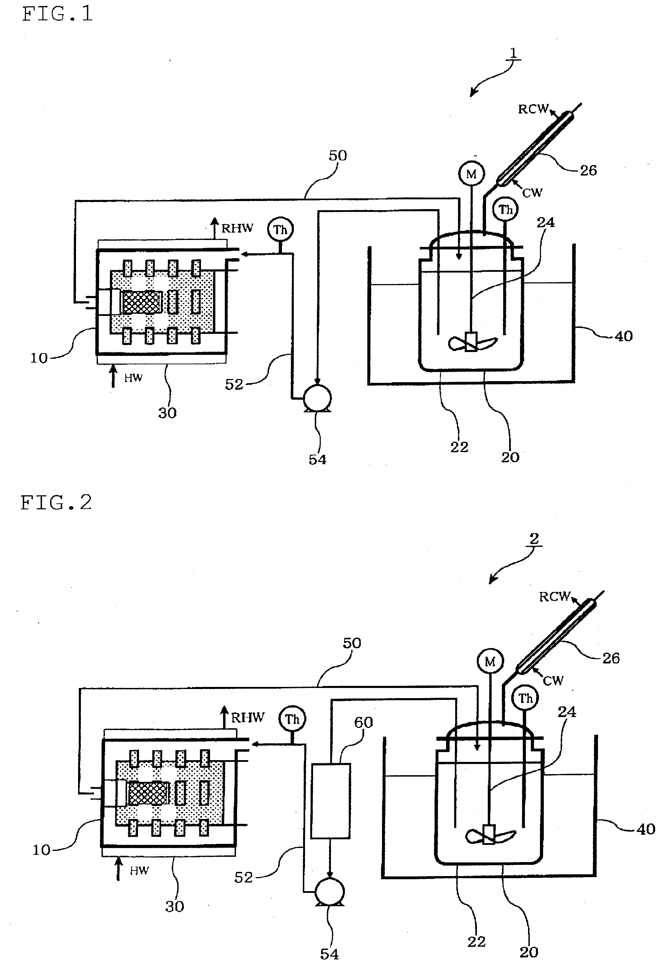

FIG. 1 is a view showing one embodiment of the production apparatus used in this aspect. It is needless to say that the invention is not limited to the following embodiment.

A production apparatus 1 is composed of a pulverizer (mechanical energy supplying means) 10 that allows raw materials to react while pulverizing them in a solvent to synthesis an ionic conductive substance and a temperature-keeping chamber (contacting means) 20 that allows raw materials to contact in the solvent to keep the temperature of the raw materials constant. In this embodiment, the temperature-keeping chamber 20 is formed of a container 22 and a stirring blade 24. The stirring blade 24 is driven by means of a motor (M).

In the pulverizer 10, in order to keep the temperature inside the pulverizer 10 at 20°C or higher and 80°C or lower, a heater 30 (first temperature-stabilizing means) that can pass hot water around the pulverizer 10 is provided. In order to keep the inside of the temperature-keeping chamber 20 at 60°C or higher and 300°C or lower, the temperature-keeping chamber 20 is put in an oil bath 40 (second temperature-stabilizing means). The oil bath 40 heats the raw materials and the solvent in the container 22 to a prescribed temperature. In the temperature-keeping chamber 20, a cooling tube 26 that cools the solvent that has been vaporized and allows it to be liquefied is provided.

The pulverizer 10 and the temperature-keeping chamber 20 are connected by a first connecting tube 50 (connecting means) and a second connecting tube 52 (connecting means). The first connecting tube 50 moves the raw materials and the solvent in the pulverizer 10 to the temperature-keeping chamber 20. The second connecting part 52 moves the raw materials and the solvent in the temperature-keeping chamber 20 to the pulverizer 10. In order to allow the raw materials or the like to circulate through the connecting tubes 50 and 52, a pump 54 (for example, a diaphragm pump) (circulating means) is provided in the second connecting tube 52.

If an ionic conductive substance is produced by using this apparatus 1, the solvent and the raw materials are respectively supplied to the pulverizer 10 and the temperature-keeping chamber 20. The raw materials at least contain the first sulfide and the second sulfide. To the heater 30, hot water (HW) is entered and discharged (RHW). With the temperature inside the pulverizer kept at 10 to be 20°C or higher and 80°C or lower by means of the heater 30, an ionic conductive substance is synthesized by reacting the raw materials while pulverizing them in the solvent. While keeping the temperature inside the temperature-keeping chamber 30 at 60°C or higher and 300°C or lower by the oil bath 40, the raw materials are allowed to react in the solvent to synthesize an ionic conductive substance. The temperature inside the temperature-keeping chamber 20 is measured by means of a thermometer (Th). At this time, the stirring blade 24 is rotated by a motor (M) to stir the reaction system, thereby to prevent a slurry formed of the raw materials and the solvent from being precipitated. In the cooling tube 26, cooling water (CW) is entered and discharged (RCW). The cooling tube 26 cools the solvent that has been vaporized in the container 22 to allow it to be liquefied, and the liquefied solvent is returned to the container 22. While an ionic conductive substance is synthesized by the pulverizer 10 and the temperature-keeping chamber 20, by means of a pump 54, the raw materials that are being reacted are circulated between the pulverizer 10 and the temperature-keeping chamber 20 through the connecting tubes 50 and 52. The temperature of the raw materials and the solvent to be supplied to the pulverizer 10 are measured by a thermometer (Th) provided in the second connecting tube 52 before the pulverizer 10.

In the present invention, the pulverizer 10 is a beads mill and it can produce an ionic conductive substance by allowing the first sulfide and the second sulfide to react while pulverizing and mixing them. Also disclosed herein are a rotational mill (tumbling mill), an oscillation mill, and a vibration mill. A beads mill can pulverize the raw materials finely. The finer the raw materials are, the higher the reactivity is, and as a result, an ionic conductive substance can be produced in a short time.

When the pulverizer contains balls, in order to prevent mixing in of foreign matters to the ionic conductive substance, that is caused by the wear of the balls and the container, it is preferred that the balls be made of zirconium, reinforced alumina or alumina.

Further, in order to prevent mixing in of the balls from the pulverizer 10 to the temperature-keeping chamber 20, according to need, a filter that serves to separate the balls from the raw materials and the solvent may be provided in the pulverizer 10 or the first connecting tube 50.

The pulverizing temperature in the pulverizer is 20°C or higher and 80°C or lower, preferably 20°C or higher and 60°C or lower. If the treatment temperature in the pulverizer is lower than 20°C, effects of shortening the reaction time required for the production are small. If the treatment temperature in the pulverizer exceeds 80°C, the strength of zirconia, reinforced alumina and alumina that constitute the apparatus and the balls may be significantly lowered, resulting in deterioration or wear of the apparatus and the balls or mixing in of foreign matters to an ionic conductive substance.

No specific restrictions are imposed on the temperature-keeping chamber 20 as long as it is a chamber that has a conductivity sufficient to keep the temperature of the contents to be in a specific temperature range by heating from the outside. Normally, the temperature-keeping chamber comprises a container, a mixing means such as a stirrer and a cooling means. The mixing means mixes a slurry comprising the raw materials and the solvent in the container and prevents the slurry from precipitating. The cooling means cools the solvent evaporated and returns it to the container.

It is preferred that the container 22 be made of a metal or glass. If a reaction is conducted at a temperature that is equal to or higher than the boiling point of the solvent, it is preferable to use a pressure-resistant container.

The reaction temperature in the container 22 is 25°C or higher and 300°C or lower. The reaction temperature is preferably 40°C or higher and 250°C or lower, further preferably 60°C or higher and 300°C or lower. If the reaction temperature is less than 60°C, a long time is taken for vitrification, resulting in poor production efficiency. If the reaction temperature exceeds 300°C, unfavorable crystals may be precipitated.

The reaction proceeds fast in a region where the temperature is high. Therefore, it is preferable to set the temperature high. If the temperature of the pulverizer 10 is set to a temperature exceeding 80°C, a mechanical problem such as wear may occur. Accordingly, it is required that the reaction temperature be set relatively high in the temperature-keeping chamber 20 and that the temperature be set relatively low in the pulverizer 10.

The ratio of the capacity of the temperature-keeping chamber 20 and the capacity of the pulverizer 10 may be arbitrary. Normally, the capacity of the temperature-keeping chamber 20 be about 1 to 100 times larger than the capacity of the pulverizer 10.

FIG. 2 is a view showing another embodiment of the production apparatus used in this aspect.

The production apparatus 2 is the same as the production apparatus 1 mentioned above, except that a heat exchanger 60 (heat exchanging means) is provided in the second connecting tube 52. The same members as those in the production apparatus 1 are indicated by the same numerals and an explanation is omitted.

The heat exchanger 60 cools the raw materials and the solvent (high temperature) supplied from the temperature-keeping chamber 20 and sends them to the pulverizer 10. For example, when a reaction is conducted at a temperature exceeding 80°C in the temperature-keeping chamber 20, the raw materials and the like are cooled to a temperature of 80°C or less and they are sent to the pulverizer 10.

### (2) Ratio

In the third production method, the amount of the second sulfide at the time of the reaction is preferably 30 mol% or more and 95 mol% or less relative to the total of the second sulfide and the first sulfide, further preferably 40 mol% or more and 85 mol% or less, with 50 mol% or more and 80 mol% or less being particularly preferable. More particularly preferably, 50 mol% or more and 75 mol% or less.

Although no specific restrictions are imposed on the mixing ratio (molar ratio) of a halogen compound relative to the total molar amount of the first and second sulfides, but it is preferably 50:50 to 99:1, more preferably 55:45 to 98:2, and particularly preferably 60:40 to 97:3.

The amount of the solvent is preferably an amount that allows the first sulfide and the second sulfide as the raw materials to be a solution or a slurry by addition of a solvent. Normally, the added amount of the raw materials (total amount) relative to 1 kg of the solvent is about 0.03 kg or more and 1 kg or less. The amount is preferably 0.05 kg or more and 0.5 kg or less, with 0.1 kg or more and 0.3 kg or less being particularly preferable.

By drying a reaction product and by removing the solvent, an ionic conductive substance can be obtained.

In the third production method, a reaction is conducted in the state where a solvent is added to the above-mentioned raw materials. By conducting a reaction in the state where a solvent is added to the above-mentioned raw materials, granulation effect at the time of the treatment can be suppressed, whereby a synthesis reaction can be accelerated efficiently. As a result, an ionic conductive substance having excellent uniformity and having a small amount of an unreacted raw material can be obtained. Further, adhesion of the raw material or a reacted product can be prevented from adhering to the wall or the like of the reaction apparatus, whereby the yield of the product can be improved.

In the third production method, as a sulfide of a metal element belonging to group I or group II of the periodic table, even if one having a particle size of 1 µm or more is used (for example, one having a particle size of 1 µm to 20 µm) is used, a reaction can be conducted easily. Here, the particle size as referred to herein means an average particle size measured by means of a laser diffraction/scattering grain size distribution measuring apparatus.

### 4. Fourth aspect of the method for producing an ionic conductive substance

The fourth aspect of the production method also disclosed herein (fourth production method) is a method comprising:
a mechanical milling treatment step of subjecting one or more compounds selected from phosphorus sulfide, germanium sulfide, silicon sulfide and boron sulfide, a sulfide of a metal element belonging to group I or group II of the periodic table, and a halogen compound represented by the following formula (1) mentioned in the first aspect to a mechanical milling treatment in a solvent; and
a contacting step of contacting the one or more compound selected from phosphorus sulfide, germanium sulfide, silicon sulfide and boron sulfide, the sulfide of a metal element belonging to group I or group II of the periodic table, the alkali metal sulfide and the alkaline earth metal sulfide, and a halogen compound represented by the following formula (1) in the solvent. The mechanical milling treatment step and the contacting step are conducted repeatedly.

The raw materials (first sulfide, second sulfide and halogen compound) or the solvent used in this aspect are the same as those in the first production method mentioned above. The amount ratio of the raw materials or the solvent are the same as that in the above-mentioned third production method.

### (1) Mechanical milling treatment step

As for the mechanical milling treatment step, various pulverizing methods exemplified in the above-mentioned second production methods can be used.

The temperature of the mechanical milling treatment step is the same as the temperature of the mechanical energy supplying means (pulverizer 10) in the above-mentioned third production method.

The rotational speed and the rotation time at the time of mechanical milling treatment are not particularly limited. The higher the rotational speed is, the higher a glassy electrolyte generation speed is. A longer rotation time leads to a high conversion rate of raw materials into a glassy electrolyte.

When a planetary ball mill is used, it suffices that the rotational speed be 250 rpm or more and 300 rpm or less and that a treatment be conducted for 5 minutes or longer and 50 hours or shorter.

Here, the treatment time indicates a time for which the raw materials and the glassy electrolyte remain in a planetary ball mill. In other words, in the invention, the raw materials and the glassy electrolyte circulate between the planetary ball mill and the temperature-keeping chamber, and the treatment time means the total time for which the raw materials and the glassy electrolyte remain in the planetary ball mill from the start to the completion of the reaction.

Here, if the above-mentioned time is short, unreacted raw materials may remain. If the above-mentioned time is long, there may be problems that the capacity of the pulverizer is required to be increased to allow the amount of the raw materials and the glassy electrolyte that can be accommodated at once to be large, or the time taken until the completion of the reaction mentioned below may be long.

### (2) Contacting step

In the contacting step, the contacting means exemplified in the third production method mentioned above can be used.

The temperature of the contacting step is the same as the reaction temperature in the contacting means (container 22) in the above-mentioned third production method.

The time of the contacting step is preferably 5 minutes or longer and 200 hours or shorter.

Here, the treatment time indicates a time for which the raw materials and the glassy electrolyte remain in a temperature-keeping chamber. In other words, in the invention, the raw materials and the glassy electrolyte circulate between the planetary ball mill and the temperature-keeping chamber, and the treatment time means the total time for which the raw materials and the glassy electrolyte remain in the planetary ball mill from the start to the completion of the reaction.

Also disclosed herein, the mechanical milling treatment step and the contacting step are conducted repeatedly in an alternate manner. The number of repetition is preferably 2 or more and 100 or less. The number of repetition is more preferably 5 or more and 100 or less, with 10 or more and 100 or less being further preferable.

If a reaction proceeds insufficiently in any of the first, second and fourth aspects also disclosed herein, and the third aspect of the present invention, a treatment may be continued in the other aspects. For example, if a reaction is insufficient in the first aspect, a treatment may be continued in the third aspect, thereby to complete the reaction. Conversely, if a treatment is insufficient in the third embodiment, a treatment may be conducted subsequently in the first aspect, thereby to complete the reaction. Further, the following is also possible. After conducting a treatment in the first aspect, a treatment is conducted in the second aspect, and then a treatment is conducted in the third aspect. After conducting a treatment in the second aspect, a treatment is conducted in the third aspect, and then a treatment is conducted in the fourth aspect.

A reaction can be conducted easily by finely pulverizing the raw materials.

### 5. Ionic conductive substance and crystallized ionic conductive substance

There may be a case when the ionic conductive substance also disclosed hereincan be obtained by any of the above-mentioned first to fourth production methods. The ionic conductive substance means a substance that conducts an ion of a metal element belonging to group I or group II of the periodic table.

It is preferred that the ionic conductivity be 1x10⁻⁵S/cm or more, more preferably 1x10⁴S/cm or more, further preferably 2x10⁻⁴S/cm or more, with 3x10⁻⁴S/cm or more being most preferable. The upper limit is not particularly restricted, but is normally 1x10⁻²S/cm or more or 5x10⁻³S/cm or less.

In the invention, the ionic conductivity is a value measured by an alternating current impedance method. The details thereof will be explained in the following Examples.

An ionic conductive substance can have an increased ionic conductivity by crystallization.

The method for producing a crystalized ionic conductive substance also disclosed hereinis a method that comprises a step of heating an ionic conductive glass at a temperature of 80°C or higher and 400°C or lower, and the ionic conductive glass comprises sulfur (S), a metal element belonging to group I or group II of the periodic table, one or more elements selected from phosphorus (P), germanium (Ge), silicon (Si), boron (B), aluminum (Al), arsenic (As), selenium (Se), tin (Sn), antimony (Sb), tellurium (Te), lead (Pb) and bismuth (Bi) and a halogen element selected from fluorine (F), chlorine (CI), bromine (Br) and iodine (I).

The ionic conductive glass may be an ionic glass substance that is produced by any of the first production method, the second production method, the third production method or the fourth production method. It may also be produced by subjecting raw materials to a mechanical milling treatment or may be produced by heating raw materials to a temperature at which the raw materials are molten, followed by reaction. The raw materials are the same as those used in the above-mentioned first production method.

The heating temperature of the ionic conductive glass is 80°C or higher and 400°C or lower, preferably 170°C or higher and 380°C or lower, and more preferably 180°C or higher and 360°C or lower. If the heating temperature is lower than 150°C, there may be a case where crystallized glass having a high degree of crystallization is hard to be obtained. If the heating temperature is higher than 400°C, crystallized glass having a low degree of crystallization may be generated.

If two crystallization peaks appear when differential scanning calorimetry (DSC) or the like is conducted, it is preferable to conduct a heat treatment at a temperature that is equal to or higher than the first peak (that is lower) and is equal to or higher than the second peak (that is higher).

It is preferred that heating of the ionic conductive glass be conducted at a temperature that is equal to or lower than a dew point of -40°C, more preferably at a temperature that is equal to or lower than a dew point of -60°C.

The pressure at the time of heating may be either normal pressure or reduced pressure.

The atmosphere may be either air or an inert gas.

The heating time is preferably 0.1 hour or longer and 24 hours or shorter, and more preferably 0.5 hour or longer and 12 hours or shorter.

By the heat treatment mentioned above, the crystallized ionic conductive substance also disclosed hereincan be obtained.

As for the crystallized ionic conductive substance, it may be crystallized entirely or part thereof may be crystallized and the remaining part may be amorphous. In the case of a crystal body obtained by crystallizing by the above-mentioned crystallization method, the ionic conductivity thereof is assumed to be higher than that of an amorphous body.

The degree of crystallization of the crystallized ionic conductive substance is preferably 50% or more, more preferably 70% or more. If 50% or more of the substance is crystallized, more significant effects of increasing the ionic conductivity by crystallization can be obtained.

An ionic conductive substance according to another aspect also disclosed hereinis an ionic conductive substance that comprises sulfur (S), a metal element belonging to group I or group II of the periodic table, one or more elements selected from phosphorus (P), germanium (Ge), silicon (Si), boron (B), aluminum (Al), arsenic (As), selenium (Se), tin (Sn), antimony (Sb), tellurium (Te), lead (Pb) and bismuth (Bi), and a halogen element selected from fluorine (F), chlorine (Cl), bromine (Br) and iodine (I), and has an ionic conductivity of 1x10⁻⁵S/cm or more.

As the ionic conductive substance that comprises sulfur (S), a metal element belonging to group I or group II of the periodic table, one or more elements selected from phosphorus (P), germanium (Ge), silicon (Si), boron (B), aluminum (Al), arsenic (As), selenium (Se), tin (Sn), antimony (Sb), tellurium (Te), lead (Pb) and bismuth (Bi), and a halogen element selected from fluorine (F), chlorine (Cl), bromine (Br) and iodine (I), an ionic conductive substance (glass) obtained by the first to fourth aspects of the production method or an ionic conductive substance obtained by crystallizing it.

The ionic conductivity of the ionic conductive substance of this aspect is preferably 1x10⁻⁵S/cm or more, more preferably 1x10⁻⁴S/cm or more, further preferably 2x10⁻⁴S/cm or more, with 3x10⁻⁴S/cm or more being most preferable.

It is preferred that the ionic conductive substance of this aspect be crystallized. It may be crystallized entirely. Alternatively, a part thereof may be crystallized, with the remaining part being amorphous. There may be a case where a crystal body has a higher ionic conductivity as compared with glass (amorphous body). In this case, it is preferred that the ionic conductive substance be crystallized. The degree of crystallization is preferably 50% or more, more preferably 70% or more. If 50% or more of the substance is crystallized, more significant effects of increasing the ionic conductivity by crystallization can be obtained.

The ionic conductive substance of this aspect can be produced by the production method of the invention and by the crystallization method of the ionic conductive substance also disclosed herein. No specific restrictions are imposed on the crystallization method.

The ionic conductive substance and the crystallized ionic conductive substance also disclosed hereincan be used as materials of a battery.

### 6. Battery

The battery according to the first aspect also disclosed hereincomprises at least one of the crystallized ionic conductive substance and the ionic conductive substance of the invention. The crystallized ionic conductive substance and the ionic conductive substance may be contained in an electrolyte layer of a battery or may be contained in an electrode layer. It may be contained in both of an electrolyte layer and an electrode layer.

The battery according to another aspect also disclosed hereinis produced by using at least one of the crystallized ionic conductive substance and the ionic conductive substance also disclosed herein. The crystallized ionic conductive substance and the ionic conductive substance may be used in an electrolyte layer of a battery or may be used in an electrode layer. It may be used in both of an electrolyte layer and an electrode layer.

As for constituent materials of the battery also disclosed herein (electrode active material, conductive aid, current collector, or the like), known materials can be used.

A known production method can be applied to the method for producing a battery.

### EXAMPLES

### Production Example 1

### [Production of lithium sulfide (Li₂S)]

In a nitrogen atmosphere, 270g of toluene as a non-polar solvent was added to a 600 ml-separable flask. Then, 30g of lithium hydroxide (manufactured by Honjo Chemical Corporation) was incorporated. While stirring at 300 rpm by means of a Fullzone stirring blade, the mixture was retained at 95°C. The temperature was elevated to 104°C while blowing hydrogen sulfide into a slurry at a supplying speed of 300 ml/min. From the separable flask, an azeotropic gas of water and toluene was continuously discharged. The azeotropic gas was condensed by a condenser outside the system to allow it to be dehydrated. During this time, toluene in an amount that is equal to that of toluene distilled are continuously supplied, whereby the level of the reaction liquid was kept constant.

The amount of water in the condensed liquid was gradually decreased. After the lapse of 6 hours from the introduction of hydrogen sulfide, distillation of water was no longer confirmed (the amount of water was 22 ml in total). During the reaction, stirring was conducted in a state where solid matters were dispersed in toluene. There was no water separated from toluene. Thereafter, hydrogen sulfide was changed to nitrogen, and nitrogen was circulated at 300 ml/min for 1 hour. The solid matters were filtrated and dried, whereby lithium sulfide as white powder was obtained.

The thus obtained powder was analyzed by titration with hydrochloric acid and silver nitrate. As a result, the purity of lithium sulfide was found to be 99.0%. Further, as a result of an X-ray diffraction measurement, it was confirmed that no peaks other than the crystal pattern of lithium sulfide were observed. The average particle size was 450 µm (slurry solution).

The specific surface area of the resulting lithium sulfide was measured by a BET method using a nitrogen gas by means of AUTOSORB 6 (manufactured by Sysmex Corporation). The specific surface area was found to be 14.8 m²/g. The pore volume was measured by the same apparatus for measuring the specific surface area. The pore volume was obtained by interpolating from the measurement point of a relative pressure of P/P₀ of 0.99 or more to 0.99, and was found to be 0.15 ml/g.

### Production Example 2

### [Finely pulverization treatment]

26g of lithium sulfide obtained in Production Example 1 was weighed in a Schlenk cocked-bottle in a glove box. In a nitrogen atmosphere, 500 ml of dehydrated toluene (manufactured by Wako Pure Chemical Industries, Ltd.) and 250 ml of dehydrated ethanol (manufactured by Wako Pure Chemical Industries, Ltd.) were added in this sequence, and the resultant was stirred by means of a stirrer at room temperature for 24 hours. After the modification treatment, the bath temperature was raised to 120°C, and a hydrogen sulfide gas was circulated at a rate of 200 ml/min for 90 minutes to conduct a treatment. After the hydrogen sulfide gas treatment, the solvent was removed by distillation in the atmosphere of nitrogen at room temperature. Further, in the vacuum, drying was conducted for 2 hours to collect finely pulverized lithium sulfide.

The finely pulverized lithium sulfide was evaluated in the same manner as in Production Example 1. The lithium sulfide was found to have a purity of 97.2%, a lithium hydroxide content of 0.3%, an average particle size (undried slurry solution) of 9.1 µm, a specific surface area of 43.2 m²/g and a pore volume of 0.68 ml/g. The purity and the lithium hydroxide content were quantified by the titration method.

The reason that the total of the analysis value was not 100% is that lithium carbonate, other ionic salts and the remaining solvent were contained.

### Comparative Example 1

The lithium sulfide (Li₂S) produced in Production Example 1 was pulverized by means of a jet mill (manufactured by Aishin Nano Technologies Co., Ltd.) to allow it to have an average particle size of 0.3 µm. 1.0g (64 mol%) of the lithium sulfide, 1.61g (21 mol%) of phosphorus pentasulfide (P₂S₅) (manufactured by Sigma-Aldrich Japan K.K.) and 0.42g (15 mol%) of lithium bromide (LiBr) (manufactured by Sigma-Aldrich Japan K.K.) were put in a nitrogen-substituted flask provided with a stirrer. Then, 50 ml of xylene which had a water content of 10 ppm (manufactured by Wako Pure Chemical Industries, Ltd.) was added, and they were allowed to contact with each other at 140°C for 24 hours.

The solid components were removed by filtration, vacuum-dried at 120°C for 40 minutes, whereby an ionic conductive substance (solid electrolyte) was obtained. The recovery rate of the solid electrolyte was 95%. Nothing was adhered to the flask or the stirrer.

The ionic conductivity of the solid electrolyte was 4.6 x 10⁻⁴S/cm.

The particle size of the lithium sulfide was measured by means of a laser diffraction/scattering grain size distribution measuring apparatus (LMS-30, manufactured by Seishin Enterprise Co., Ltd.).

The ionic conductivity was measured by the following method.

The solid electrolyte was charged in a tablet molding machine. A pressure of 4 to 6 MPa was applied to obtain a molded product. Further, an electrode mixture obtained by mixing carbon and the solid electrolyte at a weight ratio of 1:1 was put on the both sides of the molded product. A pressure was again applied by the tablet molding machine, whereby a molded product for measuring the conductivity (diameter: about 10 mm, thickness: about 1 mm) was produced. For this molded product, the ionic conductivity was measured by the alternating current impedance method. As the value of the ionic conductivity, a numerical value at 25°C was used.

Subsequently, the ionic conductive substance thus obtained was put and sealed in a SUS-made tube in a glove box in an Ar atmosphere. Then, the ionic conductive substance was subjected to a heat treatment at 230°C for 2 hours, whereby a crystallized solid electrolyte was obtained. The solid electrolyte after the heat treatment had an ionic conductivity of 1.3x10⁻³S/cm.

### Comparative Example 2

As a starting material, Li₂S of the Production Example 1 and P₂S₅ (manufactured by Sigma-Aldrich Japan K.K.) and LiBr (manufactured by Sigma-Aldrich Japan K.K.) were used. 0.337g (64 mol%) of Li₂S, 0.532g (21 mol%) of P₂S₅ and 0.141g (15 mol%) of LiBr were charged in a 45 ml-alumina-made container containing 10 alumina balls each having a diameter of 10 mm. Further, 3 ml of dehydrated toluene (manufactured by Wako Pure Chemical Industries, Ltd.) was added and sealed.

All of the weighing, addition and sealing mentioned above were conducted in a glove box in a nitrogen atmosphere. As for each equipment used, one from which water had been removed by a dryer in advance was used. The water content in the dehydrated toluene was measured by a Karl Fischer method and was found to be 8.4 ppm.

The sealed alumina container was subjected to a mechanical milling treatment by means of a planetary ball mill (P-7, manufactured by Fritch Japan Co., Ltd.) at room temperature and at a speed of 370 rpm for 20 hours, whereby white yellow powder slurry (creamy) was obtained.

The resulting slurry was filtrated and air-dried. Then, the slurry was dried by means of a tube heater at 160°C for 2 hours, whereby an ionic conductive substance (solid electrolyte) was obtained as powder. The recovery rate at this time was 95%, and nothing was adhered in the apparatus.

The ionic conductivity of this glass ionic conductive substance was 4.2 10⁻⁴ S/cm.

The solid electrolyte powder thus obtained was put and sealed in a SUS-made tube in a glove box in an Ar atmosphere. Then, the solid electrolyte powder was subjected to a heat treatment at 230°C for 2 hours, whereby a crystallized ionic conductive substance (solid electrolyte glass ceramic) was obtained.

The ion conductivity of this electrolyte glass ceramic was 1.2 x 10⁻³ S/cm.

### Example 3

An apparatus shown in FIG. 1 was used. As a stirrer, a star mill miniature (0.15L) (beads mill) manufactured by Ashizawa Finetech Ltd. was used. 444g of zirconia balls each having a diameter of 0.5 mm were charged. As the temperature-keeping chamber, a 1.5 L-glass-made reactor provided with a stirrer was used.

All of the weighing, addition and sealing mentioned above was conducted in a glove box in a nitrogen atmosphere. As for each equipment used, one from which water had been removed by a dryer in advance was used. The water content in the dehydrated toluene was measured by a Karl Fischer method and was found to be 8.4 ppm.

A mixture obtained by adding 1248 ml (water content: 8.4 ppm) of dehydrated toluene (manufactured by Wako Pure Chemical Industries, Ltd.) to 33.7g (64 mol%) of the lithium sulfide of Production Example 1, 53.2g (21 mol%) of P₂S₅ (manufactured by Sigma-Aldrich Japan K.K.) and 14.1g (15 mol%) of LiBr (manufactured by Sigma-Aldrich Japan K.K.) were charged in the temperature-keeping chamber and the mill.

By means of a pump, the contents were allowed to circulate between the temperature-keeping chamber and the mill at a flow rate of 480 ml/min, and the temperature-keeping chamber was heated to a temperature of 70 to 80°C.

Hot water was passed through the mill main body by external circulation such that the liquid temperature could be kept at 70°C, and the mill was operated under conditions of a circumferential speed of 12 m/s. Every 2 hours, a slurry was collected and dried at 150°C, whereby white yellow powder slurry (creamy) was obtained.

After filtrating and air-drying, the resulting slurry was dried by means of a tube heater at 160°C for 2 hours, whereby a solid electrolyte was obtained as powder. The recovery rate at this time was 95% and nothing was adhered in the reaction apparatus.

The circulation was continued until the peak of the lithium sulfide in the X-ray diffraction measurement (CuKα:λ=1.5418Å) of the resulting powder became sufficiently smaller than the halo pattern derived from the solid electrolyte glass. The reaction time was 24 hours. The ionic conductivity of the resulting glass was 5.2 x 10⁻⁴S/cm.

The solid electrolyte powder was put and sealed in a SUS-made tube in a glove box in an Ar atmosphere. Then, the solid electrolyte powder was subjected to a heat treatment at 230°C for 2 hours, whereby a solid electrolyte glass ceramic was obtained.

The ionic conductivity of the electrolyte glass ceramic was 1.8 x 10⁻³ S/cm.

### Comparative Example 4

An ionic conductive substance was produced in the same manner as in Example 3, except that 30.9g (64 mol%) of the lithium sulfide in Production Example 1, 49.4g (21 mol%) of P₂S₅ (manufactured by Sigma-Aldrich Japan K.K.), and 20.0g (15 mol%) of lithium iodide (Lil) (manufactured by Wako Pure Chemical Industries, Ltd.) were used as the raw materials.

The recovery rate at this time was 95%, and nothing was adhered in the reaction apparatus. The ionic conductivity of the resulting glass was 5.4 x 10⁻⁴S/cm.

The glass was put and sealed in a SUS-made tube in a glove box in an Ar atmosphere, and was subjected to a heat treatment at 210°C for 2 hours, whereby a solid electrolyte glass ceramic was obtained. The ionic conductivity of the electrolyte glass ceramic was found to be 2.1 x 10⁻³ S/cm.

### Comparative Example 5

An ionic conductive substance was produced in the same manner as in Example 3, except that 39.7g (76 mol%) of the lithium sulfide in Production Example 1, 46.7g (19 mol%) of P₂S₅ (manufactured by Sigma-Aldrich Japan K.K.) and 14.8g (5 mol%) of phosphorus bromide (PBr₃) (manufactured by Tokyo Chemical Industry Co., Ltd.) were used as the raw materials.

The recovery rate at this time was 95%, and nothing was adhered in the apparatus. The ionic conductivity of the resulting glass was 2.0 x 10⁻⁴ S/cm.

The glass was put and sealed in a SUS-made tube in an Ar atmosphere, and was subjected to a heat treatment at 240°C for 2 hours, whereby a solid electrolyte glass ceramic was obtained. The ionic conductivity of the electrolyte glass ceramic was found to be 7.0 x 10⁻⁴ S/cm.

### Comparative Example 6

Synthesis was conducted in the same manner as in Comparative Example 2, except that the solvent was not used.

Specifically, Li₂S of the Production Example 1 and P₂S₅ (manufactured by Sigma-Aldrich Japan K.K.) and LiBr (manufactured by Sigma-Aldrich Japan K.K.) were used as the starting materials. 0.337g (64 mol%) of Li₂S, 0.532g (21 mol%) of P₂S₅ and 0.141g (14 mol%) of LiBr were charged in a 45 ml-alumina-made container containing 10 alumina balls each having a diameter of 10mm.

All of the weighing, addition and sealing mentioned above were conducted in a glove box. As for each equipment used, one from which water had been removed by a dryer in advance was used.

The sealed alumina container was subjected to a mechanical milling treatment by means of a planetary ball mill (P-7, manufactured by Fritch Japan Co., Ltd.) at room temperature at a speed of 370 rpm for 20 hours. After the mechanical milling treatment, white yellow sticking matters were adhered to the wall of the aluminum container, the lid and the balls, and no powder was produced. These sticking matters were crushed by means of a hammer or the like to allow them to be peeled from the wall, the lid and the balls. Further, by pulverizing the sticking matters in a mortar, white yellow powder was obtained. Meanwhile, the operation of peeling the sticking matters from the container wall or the like takes a significantly long time, and the operation of pulverizing in a mortar also takes a significantly long time. In addition, it was impossible to peel part of the sticking matters from the container wall or the like, and hence, the recovery rate was 64%. The ionic conductivity of the glass solid electrolyte was 6.5 x 10⁻⁴ S/cm.

The ionic conductivity of the crystallized solid electrolyte after conducting a heat treatment in an argon atmosphere at 230°C for 2 hours was 1.7 x 10⁻³ S/cm.

### Comparative Example 7

An ionic conductive substance was produced in the same manner as in Comparative Example 6, except that 0.309g (64 mol%) of the lithium sulfide in Production Example 1, 0.494g (21 mol%) of P₂S₅ (manufactured by Sigma-Aldrich Japan K.K.) and 0.20g (15 mol%) of lithium iodide (manufactured by Wake Pure Chemical Industries, Ltd.) were used.

Sticking matters were observed in the wall of the alumina container, the lid part and the balls as in Comparative Example 1, and the recovery rate was 62%. The ionic conductivity of the resulting glass solid electrolyte was 5.3 x 10⁻⁴ S/cm.

The ionic conductivity of the crystallized solid electrolyte after conducting a 2-hour heating treatment at 210°C in an argon atmosphere was 1.7 x 10⁻³ S/cm.

### Comparative Example 8

A 0.5L-autoclave provided with a stirring blade was substituted by nitrogen. 10.0g (64 mol%) of the lithium sulfide prepared in Production Example 1, 15.8g (21 mol%) of P₂S₅ (manufactured by Sigma-Aldrich Japan K.K.), 4.18g (15 mol%) of LiBr (manufactured by Sigma-Aldrich Japan K.K.) and 300 ml of toluene having a water content of 8.4 ppm (manufactured by Wake Pure Chemical Industries, Ltd.) were charged therein. A contacting reaction was conducted at 150°C for 72 hours.

This slurry solution was vacuum-dried to obtain solid electrolyte glass. As compared with one obtained in Comparative Example 1, a relatively strong peak derived from the raw materials was observed in an X-ray diffraction pattern. The recovery rate at this time was 95%, and no sticking matters were adhered to the autoclave.

The resulting solid electrolyte glass was powdery, and had an ionic conductivity of 3.2 x 10⁻⁴ S/cm. The thus obtained solid electrolyte glass was put and sealed in a SUS-made tube in a glove box in an Ar atmosphere, and a 2-hour heating treatment at 210°C was conducted, whereby a solid electrolyte glass ceramic was obtained. The ionic conductivity of the resulting solid electrolyte glass ceramic was 4.5 x 10⁻⁴ S/cm.

### Comparative Example 9

A 0.5L-autoclave provided with a stirring blade was substituted by nitrogen. 10.0g (64 mol%) of the finely pulverized lithium sulfide prepared in Production Example 2, 15.8g (21 mol%) of P₂S₅ (manufactured by Sigma-Aldrich Japan K.K.), 4.18g (15 mol%) of LiBr (manufactured by Sigma-Aldrich Japan K.K.) and 300 ml of toluene having a water content of 8.4 ppm (manufactured by Wake Pure Chemical Industries, Ltd. ) were charged therein. A contact reaction was conducted at 150°C for 72 hours.

This slurry solution was vacuum-dried to obtain solid electrolyte glass. As compared with one obtained in Comparative Example 1, a relatively strong peak derived from the raw materials was observed in an X-ray diffraction pattern. However, the peak was weaker than that in Comparative Example 8. The recovery rate at this time was 95%, and no sticking matters significantly adhered were observed in the autoclave.

The resulting solid electrolyte glass was powdery, and had an ionic conductivity of 3.7 x 10⁻⁴ S/cm. The thus obtained solid electrolyte glass was put and sealed in a SUS-made tube in a glove box in an Ar atmosphere, and a 2-hour heating treatment at 210°C was conducted, whereby a solid electrolyte glass ceramic was obtained. The ionic conductivity of the resulting solid electrolyte glass ceramic was 6.3 x 10⁻⁴ S/cm.

### Example 10

A 0.5L-autoclave provided with a stirring blade was substituted by nitrogen. 10.0g (64 mol%) of the finely pulverized lithium sulfide prepared in Production Example 2, 15.8g (21 mol%) of P₂S₅ (manufactured by Sigma-Aldrich Japan K.K.), 4.18g (15 mol%) of LiBr (manufactured by Sigma-Aldrich Japan K.K.) and 300 ml of toluene having a water content of 8.4 ppm (manufactured by Wako Pure Chemical Industries, Ltd. ) were charged therein. A contacting reaction was conducted at 150°C for 72 hours. This reaction was repeated three times, whereby a slurry solution was obtained in a total amount of 900 ml.

Subsequently, 300 ml of dehydrated toluene was further added to this slurry solution. By means of an apparatus shown in FIG. 1, an additional reaction was conducted for 8 hours. The additional reaction was conducted at a temperature in the temperature-keeping chamber of 70 to 80°C, a circumferential speed of 12 m/s and a number of rotation of beads mill of 3880 rpm. The resulting solid electrolyte glass slurry was taken out, and vacuum-dried to obtain solid electrolyte glass. The recovery rate at this time was 92%, and no sticking matters significantly adhered were observed in the autoclave, the temperature-keeping chamber and the mill.

The resulting solid electrolyte glass was powdery, and had an ionic conductivity of 4.2 x 10⁻⁴ S/cm. The thus obtained solid electrolyte glass was put and sealed in a SUS-made tube in a glove box in an Ar atmosphere, and was subjected to a heat treatment at 210°C for 2 hours, whereby a solid electrolyte glass ceramic was obtained. The ionic conductivity of the resulting solid electrolyte glass ceramic was 1.5 x 10⁻³ S/cm.

### Example 11

A 0.5L-autoclave provided with a stirring blade was substituted by nitrogen. 11.7g of the finely pulverized lithium sulfide prepared in Production Example 2, 18.3g of P₂S₅ (manufactured by Sigma-Aldrich Japan K.K.) and 300 ml of toluene having a water content of 8.4 ppm (manufactured by Wako Pure Chemical Industries, Ltd.) were charged therein. A reaction was conducted at 150°C for 72 hours. This reaction was repeated three times, whereby a slurry solution was obtained in a total amount of 900 ml.

Subsequently, to this slurry solution, 14.6g of LiBr (manufactured by Sigma-Aldrich Japan K.K.) and 300 ml of dehydrated toluene were added such that the molar ratio of Li₂S/P₂S₅/LiBr became 64/21/15. By means of an apparatus shown in FIG. 1, an additional reaction was conducted for 15 hours. The additional reaction was conducted at a temperature in the

**Table 1**

| | Type of solvent | Total amount of solvent [ml] | Water content in solvent [ppm] | Reaction temperature [°C] | Reactio n time [h] | Heat treatment temperature [°C] | Heat treatmen t time [h] | Ionic conductivity before heat treatment [x10⁻⁴S/cm] | Ionic conductivity after heat treatment [x10⁻⁴S/cm] | Recover y rate [%] | Matter adhered to apparatus |
|---|---|---|---|---|---|---|---|---|---|---|---|
| Comparative Example 1 | Xylene | 50 | 10 | 140 | 24 | 230 | 2 | 4.6 | 13 | 95 | None |
| Comparative Example 2 | Toluen e | 3 | 8.4 | Room temperature | 20 | 230 | 2 | 4.2 | 12 | 95 | None |
| Example 3 | Toluen e | 1248 | 8.4 | 70 to 80 | 24 | 230 | 2 | 5.2 | 18 | 95 | None |
| Comparative Example 4 | Toluen e | 1248 | 8.4 | 70 to 80 | 24 | 210 | 2 | 5.4 | 21 | 95 | None |
| Comparative Example 5 | Toluen e | 1248 | 8.4 | 70 to 80 | 24 | 240 | 2 | 2.0 | 7.0 | 95 | None |
| Comparative Example 6 | None | - | - | Room temperature | 20 | 230 | 2 | 6.5 | 17 | 64 | Present |
| Comparative Example 7 | None | - | - | Room temperature | 20 | 210 | 2 | 5.3 | 17 | 62 | Present |
| Comparative Example 8 | Toluen e | 300 | 8.4 | 150 | 72 | 210 | 2 | 3.2 | 4.5 | 95 | None |
| Comparative Example 9 | Toluen e | 300 | 8.4 | 150 | 72 | 210 | 2 | 3.7 | 6.3 | 95 | None |
| Example 10 | Toluen e | 1200 | 8.4 | 150, 70 to 80 | 72x3+8 | 210 | 2 | 4.2 | 15 | 92 | None |
| Example 11 | Toluen e | 1200 | 8.4 | 150, 70 to 80 | 72x3+ 1 5 | 210 | 2 | 5.3 | 21 | 93 | None |

**Table 1**

| | Type of solvent | Total amount of solvent [ml] | Water content in solvent [ppm] | Reaction temperature [°C] | Reaction time [h] | Heat treatment temperature [°C] | Heat treatment time [h] | Ionic conductivity before heat treatment [x10⁻⁴S/cm] | Ionic conductivity after heat treatment [x10⁻⁴S/cm] | Recovery rate [%] | Matter adhered to apparatus |
|---|---|---|---|---|---|---|---|---|---|---|---|
| Example 1 | Xylene | 50 | 10 | 140 | 24 | 230 | 2 | 4.6 | 13 | 95 | None |
| Example 2 | Toluene | 3 | 8.4 | Room temperature | 20 | 230 | 2 | 4.2 | 12 | 95 | None |
| Example 3 | Toluene | 1248 | 8.4 | 70 to 80 | 24 | 230 | 2 | 5.2 | 18 | 95 | None |
| Example 4 | Toluene | 1248 | 8.4 | 70 to 80 | 24 | 210 | 2 | 5.4 | 21 | 95 | None |
| Example 5 | Toluene | 1248 | 8.4 | 70 to 80 | 24 | 240 | 2 | 2.0 | 7.0 | 95 | None |
| Comp. Ex. 1 | None | - | - | Room temperature | 20 | 230 | 2 | 6.5 | 17 | 64 | Present |
| Comp. Ex. 2 | None | - | - | Room temperature | 20 | 210 | 2 | 5.3 | 17 | 62 | Present |
| Example. 6 | Toluene | 300 | 8.4 | 150 | 72 | 210 | 2 | 3.2 | 4.5 | 95 | None |
| Example 7 | Toluene | 300 | 8.4 | 150 | 72 | 210 | 2 | 3.7 | 6.3 | 95 | None |
| Example | Toluene | 1200 | 8.4 | 150, 70 to 80 | 72x3+8 | 210 | 2 | 4.2 | 15 | 92 | None |
| Example | Toluene | 1200 | 8.4 | 150, 70 to 80 | 72x3+15 | 210 | 2 | 5.3 | 21 | 93 | None |

### Industrial Applicability

The production method of the invention is preferable for the production of an ionic conductive substance such as sulfide-based glass.

Further, the ionic conductive substance and the crystalline ionic conductive substance also disclosed hereincan be used as the raw material of a sodium secondary battery or the like.

## Claims

1. A method for producing an ionic conductive substance wherein an ionic conductive substance is produced by using a production apparatus that is provided with:
a mechanical energy supplying means that imparts mechanical energy to raw materials in a solvent;
a contacting means that allows the raw materials to contact with each other in the solvent;
a connecting means that connects the mechanical energy supplying means with the contacting means; and
a circulating means that circulates the raw materials and/or a reaction product of the raw materials between the mechanical energy supplying means and the contacting means through the connecting means,
wherein
the raw materials comprise one or more compounds selected from phosphorus sulfide, germanium sulfide, silicon sulfide and boron sulfide, a sulfide of a metal element belonging to group I or group II of the periodic table, and a halogen compound,
**characterized in that** the halogen compound is LiBr and the mechanical energy supplying means is a beads mill.

2. The method for producing an ionic conductive substance according to claim 1, wherein the one or more compounds selected from phosphorus sulfide, germanium sulfide, silicon sulfide and boron sulfide is phosphorus sulfide.

3. The method for producing an ionic conductive substance according to claim 1 or 2, wherein the sulfide of a metal element belonging to group I or group II of the periodic table is lithium sulfide.

4. The method for producing an ionic conductive substance according to any one of claims 1 to 3, wherein the solvent is a hydrocarbon-based organic solvent.

5. The method for producing an ionic conductive substance according to any one of claims 2 to 4, wherein the amount of phosphorus sulfide at the time of the reaction is 30 mol% or more and 95 mol% or less relative to the total lithium sulfide and phosphorus sulfide.

6. The method for producing an ionic conductive substance according to any one of claims 2 to 5, wherein the molar ratio of the total molar amount of lithium sulfide and phosphorus sulfide relative to the halogen compound is 50:50 to 99:1.

7. The method for producing an ionic conductive substance according to any one of claims 1 to 6, wherein the temperature in the mechanical energy supplying means is 20°C or higher and 80°C or lower.

8. The method for producing an ionic conductive substance according to any one of claims 1 to 7, wherein the temperature in the contacting means is 25°C or higher and 300°C or lower.

## Patentansprüche

1. Verfahren zur Herstellung einer Ionen leitenden Substanz, wobei eine Ionen leitende Substanz unter Verwendung einer Produktionsvorrichtung hergestellt wird, die mit Folgendem versehen ist:
einem Mittel zur Lieferung mechanischer Energie, das mechanische Energie an Rohmaterialien in einem Lösungsmittel weitergibt;
einem Kontaktmittel, das Rohmaterialien ermöglicht im Lösungsmittel miteinander in Kontakt zu kommen;
einem Verbindungsmittel, welches das mechanische Energie liefernde Mittel mit dem Kontaktmittel verbindet; und
einem Umlaufmittel, das die Rohmaterialien und/oder ein Reaktionsprodukt der Rohmaterialien zwischen dem Energie liefernden Mittel und dem Kontaktmittel durch das Verbindungsmittel zirkuliert,
wobei:
die Rohmaterialien eine oder mehrere Verbindungen umfassen, die aus Phosphorsulfid, Germaniumsulfid, Siliciumsulfid und Borsulfid, einem Sulfid eines Metallelements, das zur Gruppe I oder Gruppe II der Tabelle des Periodensystems gehört, und einer Halogenverbindung selektiert wurden,
**dadurch gekennzeichnet, dass** die Halogenverbindung LiBr ist und das Mittel zur Lieferung mechanischer Energie eine Perlmühle ist.

2. Verfahren zur Herstellung einer Ionen leitenden Substanz nach Anspruch 1, wobei die eine oder die mehreren Verbindungen, die aus Phosphorsulfid, Germaniumsulfid, Siliciumsulfid und Borsulfid selektiert wurden, Phosphorsulfid ist.

3. Verfahren zur Herstellung einer Ionen leitenden Substanz nach Anspruch 1 oder 2, wobei das Sulfid eines Metallelements, das zur Gruppe I oder Gruppe II der Tabelle des Periodensystems gehört, Lithiumsulfid ist.

4. Verfahren zur Herstellung einer Ionen leitenden Substanz nach einem der Ansprüche 1 bis 3, wobei das Lösungsmittel ein organisches Lösungsmittel auf Basis von Kohlenwasserstoff ist.

5. Verfahren zur Herstellung einer Ionen leitenden Substanz nach einem der Ansprüche 2 bis 4, wobei die Menge von Phosphorsulfid zur Zeit der Reaktion 30 Mol% oder mehr und 95 Mol% oder weniger relative zum gesamten Lithiumsulfid und Phosphorsulfid beträgt.

6. Verfahren zur Herstellung einer Ionen leitenden Substanz nach einem der Ansprüche 2 bis 5, wobei, das Molverhältnis der gesamten Molmenge von Lithiumsulfid und Phosphorsulfid relativ zur Halogenverbindung 50:50 bis 99:1 beträgt.

7. Verfahren zur Herstellung einer Ionen leitenden Substanz nach einem der Ansprüche 1 bis 6, wobei die Temperatur im Mittel zur Lieferung mechanischer Energie 20 °C oder höher und 80 °C oder niedriger beträgt.

8. Verfahren zur Herstellung einer Ionen leitenden Substanz nach einem der Ansprüche 1 bis 7, wobei die Temperatur im Kontaktmittel 25 °C oder höher und 300 °C oder niedriger beträgt.

## Revendications

1. Procédé de production d'une substance conductrice ionique **caractérisé en ce qu'**une substance conductrice ionique est produite par l'usage d'un appareil de production doté:
d'un moyen de fourniture de l'énergie mécanique qui communique l'énergie mécanique à des matières premières dans un solvant;
d'un moyen de contact qui permet aux matières premières d'entrer en contact les unes avec les autres dans le solvant;
d'un moyen de raccordement qui sert à connecter le moyen de fourniture de l'énergie mécanique au moyen de contact, et
d'un moyen de circulation qui fait circuler les matières premières et/ou un produit de réaction des matières premières entre le moyen de fourniture de l'énergie mécanique et le moyen de contact par l'intermédiaire du moyen de raccordement,
**caractérisé en ce que**
les matières premières comprennent un ou plusieurs composés sélectionnés parmi le sulfure phosphoreux, le sulfure de germanium, le sulfure de silicium et le sulfure de bore, le sulfure d'un élément métallique appartenant au groupe I ou au groupe II du tableau périodique, et un composé d'halogène,
**caractérisé en ce que** le composé d'halogène est le LiBr et **en ce que** le moyen de fourniture de l'énergie mécanique est un broyeur à perles.

2. Procédé de production d'une substance conductrice ionique selon la revendication 1, **caractérisé en ce que** le ou les composés sélectionnés parmi le sulfure phosphoreux, le sulfure de germanium, le sulfure de silicium et le sulfure de bore est le sulfure de phosphore.

3. Procédé de production d'une substance conductrice ionique selon la revendication 1 ou 2, **caractérisé en ce que** le sulfure d'un élément métallique appartenant au groupe I ou au groupe II du tableau périodique est le sulfure de lithium.

4. Procédé de production d'une substance conductrice ionique selon l'une quelconque des revendication 1 à 3, **caractérisé en ce que** le solvant est un solvant organique à base d'hydrocarbure.

5. Procédé de production d'une substance conductrice ionique selon l'une quelconque des revendication 2 à 4, **caractérisé en ce que** la quantité de sulfure phosphoreux au moment de la réaction est égale ou supérieure à 30 % de mol et égale ou inférieure à 95 % de mol par rapport à la quantité totale de sulfure de lithium et de sulfure de phosphore.

6. Procédé de production d'une substance conductrice ionique selon l'une quelconque des revendication 2 à 5, **caractérisé en ce que** le rapport molaire entre la quantité molaire totale de sulfure de lithium et de sulfure de phosphore par rapport au composé d'halogène est compris entre 50:50 et 99:1.

7. Procédé de production d'une substance conductrice ionique selon l'une quelconque des revendication 1 à 6, **caractérisé en ce que** la température dans le moyen de fourniture de l'énergie mécanique est égale ou supérieure à 20°C et égale ou inférieure à 80°C.

8. Procédé de production d'une substance conductrice ionique selon l'une quelconque des revendication 1 à 7, **caractérisé en ce que** la température dans le moyen de contact est égale ou supérieure à 25°C et égale ou inférieure à 300°C.
